# EUROPEAN PATENT APPLICATION

(11) **EP 0 990 804 A1**
(43) Date of publication of application: **05.04.2000**
(21) Application number: 99203066.8
(22) Date of filing: 20.09.1999
(51) Int. Cl.: F16B 12/20

(54) **Connecting fitting**

(30) Priority: 02.10.1998 SE 9803340
(71) Applicant: KINNARPS AB, 521 88 Kinnarp (SE)
(72) Inventor: Ström, Johan, 541 40 Skövde (SE); Andersson, Björn, 521 92 Falköping (SE); Svensson, Carl-Göran, 520 24 Blidsberg (SE)
(74) Representative: Wallengren, Yngvar

(57) **Abstract**

A connecting fitting (1) for interconnecting a first and a second furniture component comprises a housing (4) which may be accommodated in a hole of corresponding configuration in the first furniture component. A pin (5) projects out from the housing (4) and is insertable in an aperture in the second furniture component. Further, the connecting fitting (1) has an operating device (6) which is disposed to rotate the pin (5) about its longitudinal axis. The pin (5) is provided with engagement means (14) for engagement with the second furniture component when the pin (5) is rotated. The pin (5) is retractable in its entirety in the housing (4). The operating device (6) includes a lever (8) which is movable in a corridor (7). The lever (8) may be moved between two end positions (9, 10) which correspond to the wholly projecting and wholly retracted positions, respectively, of the pin (5).

## Description

### TECHNICAL FIELD

The present invention relates to a connecting fitting for interconnecting a first and a second furniture component, and comprising a housing which may be accommodated in a hole of corresponding configuration in the first furniture component, a pin projecting from the housing which is insertable in an aperture in a second furniture component, and an operating device which is disposed to rotate the pin about its longitudinal axis, the pin being provided with engagement means for engagement with the second furniture component on rotation of the pin.

### BACKGROUND ART

European Patent Specification No. 708 256 discloses a connecting fitting for interconnecting two furniture components. The fitting comprises a housing which may be accommodated in the one furniture component, a projection which extends outside this furniture component and a pin which extends a further distance outside the projection. The pin is provided with eccentric threads for engagement with the second furniture component when the pin is rotated about its longitudinal axis.

A major drawback in the above-described fitting is that the projection and the pin extend outside the first furniture component when the fitting has been mounted. The projecting parts may cause problems in the form of scratches on packaging, storage and transport, and there is also an imminent risk that the projecting parts of the fitting be damaged.

Furthermore, it is not certain whether the fitting described in EP 708 256 realises a satisfactory drawing of the furniture components towards one another.

### PROBLEM STRUCTURE

The present invention has for its object to design the connecting fitting intimated by way of introduction such that the projecting parts are eliminated during packaging, transport and storage and the drawbacks inherent therein are obviated.

### SOLUTION

The object forming the basis of the present invention will be attained if the connecting fitting intimated by way of introduction is characterized in that the pin is disposed to be retractable in its entirety from its projecting position into the housing.

Further advantages will be attained if the fitting according to the present invention is also given one or more of the characterizing features as set forth in appended subclaims 2 to 12.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: shows two connecting fittings according to the present invention mounted in a first furniture component, the pin being located in its wholly retracted position;
- Fig. 2: is a perspective view of the fitting, where the pin is located in its wholly projecting position;
- Fig. 3: is a top plan view of the fitting, with the pin in the wholly projecting position;
- Fig. 4: is a view corresponding to that of Fig. 3, the pin being located in its wholly retracted position; and
- Fig. 5: is a perspective exploded view of the connecting fitting with associated bushing.

### DESCRIPTION OF PREFERRED EMBODIMENT

As will have been apparent from the introduction, the present invention has for its object to realise a connecting fitting which makes for a simple and durable interconnection of two furniture components. An essential feature of the present invention is that the fitting is designed such that projecting parts are lacking when the connecting fitting has been mounted in a hole in a first furniture component and the fitting is located in its transport position, in which case its pin is wholly retracted.

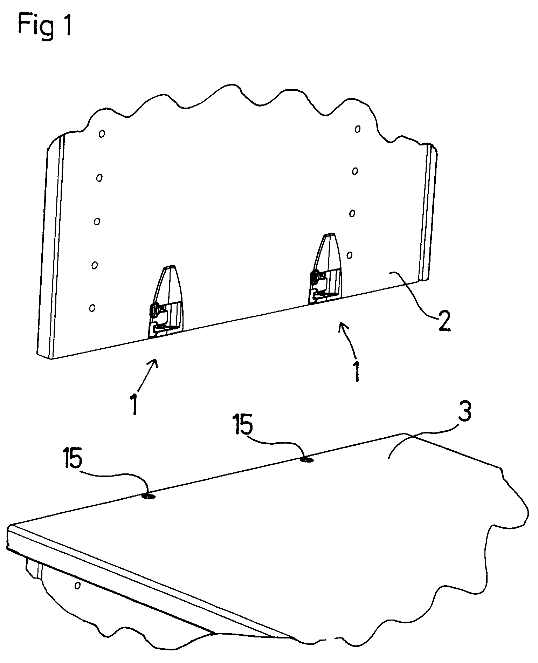

Fig. 1 shows two connecting fittings 1 which have been mounted at the lower edge of a first furniture component 2. The first furniture component 2 is intended to be interconnected with a second furniture component 3 in which is disposed bushing 15 for each one of the connecting fittings 1. The bushings serve the purpose of making for or improving the interconnection with the first furniture component 2 and the connecting fittings 1 are disposed there. In the Figure, the fittings 1 have no projecting parts beyond the edge of the first furniture component 2.

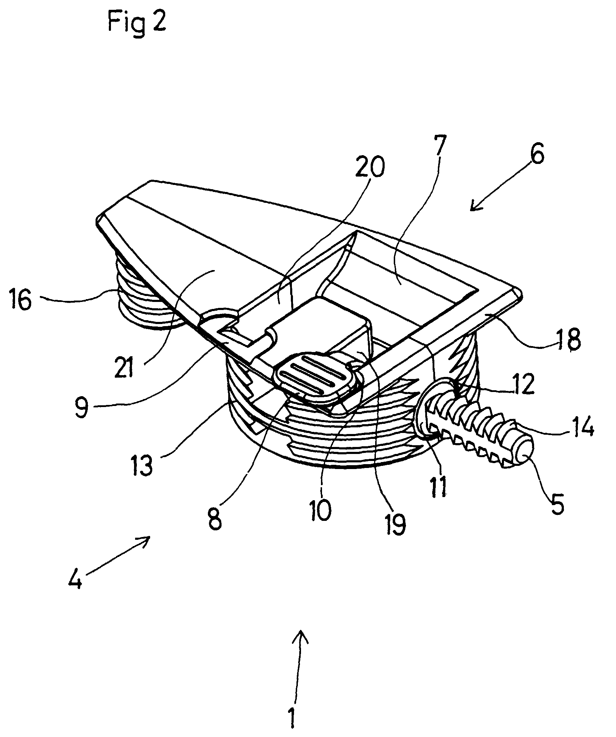

Fig. 2 shows the connecting fitting 1 in perspective. The connecting fitting consists of a housing 4 in whose wall 13 there is provided an aperture 12 from which a pin 5 projects. The position of the pin is guided with the aid of an operating device 6. The operating device in turn includes a lever 8 which is movably disposed in a corridor 7 and which is disposed on a cylindrical journal member 11 connected with the pin 5. The journal member 11, which is of greater cross sectional area than the pin 5, is disposed with tight fit in the aperture 12.

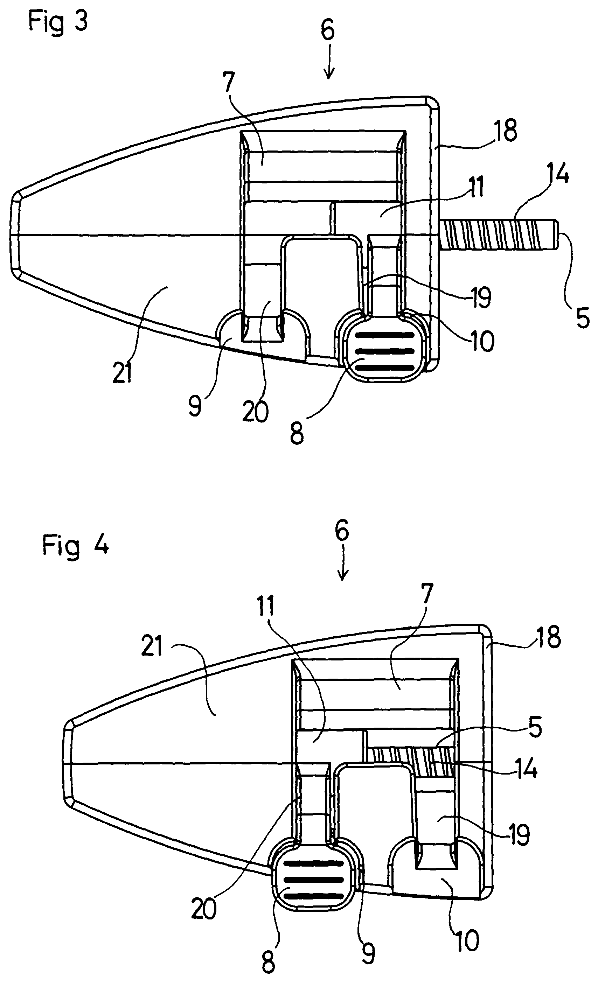

In the embodiment which is shown in the Figure, the corridor 7 is approximately U-shaped with two end positions 9 and 10. When the lever 8 is located in the end position 9, the pin 5 is wholly retracted in the housing 4. In order to move the pin 5 to its wholly projecting position, the lever 8 is twisted away from the end position 9 in the inner corridor section 20, and is moved along the corridor 7 whereafter it is twisted to the end position 10 in the outer corridor section 19. The two different end positions of the lever 8 and the pin 5, respectively are also shown in Figs. 3 and 4.

When the pin 5 is moved to its projecting position with the aid of the lever 8, the journal member 11 located therebetween will be accommodated in the aperture 12 in the outer part of the wall 13 of the housing 4. The inner part of the wall 13 may possibly also be provided with an aperture 17 which may accommodate the journal member 11 when the pin 5 is located in its wholly retracted position.

The lever 8 is disposed on the journal member 11 with such an angle and curvature that the outermost portion of the lever 8 lies approximately in the same plane as the upper side of the fitting 1 when it has been moved to one of its end positions 9 or 10. Thus, the fitting 1 lacks projecting parts in both the transport position and in the operative position.

The operating device 6 may be disposed such that the lever 8 is snapped fast in the end positions 9 and 10 in the corridor 7. This may, for example, be realised by suitably placed throttles or projections (not shown) for example in the walls of the corridor 7 close to the end positions 9 and 10, respectively, or on the circumferential surface of the journal member 11.

The pin 5 is provided with engagement means which, in the preferred embodiment, consist of threads 14. Preferably, the pin 5 has two diametrically opposed flat sides so that its cross section is approximately oval. When the pin 5 is passed into an aperture of corresponding configuration in the second furniture component 3, good engagement will be obtained when the pin 5 is rotated through approximately 90° with the aid of the lever 8.

The fitting 1 is designed to be placed so close to the edge of the first furniture component 2 that a portion of the wall 13 of the housing 4 is visible at this edge.

The outside of the wall 13 of the housing 4 is provided with engagement means, for example a series of annular projections, for engagement with the inner walls of the hole in the furniture component 2 in which the connecting fitting 1 is mounted.

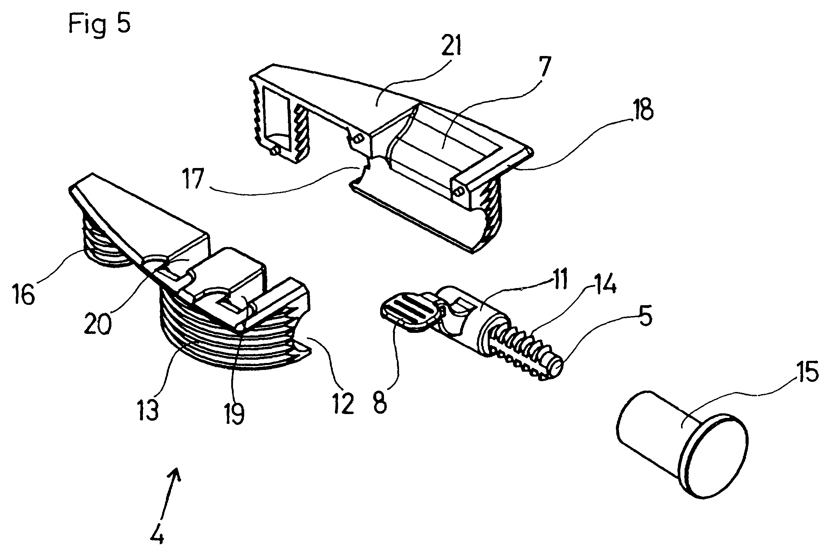

The bushing 15 is shown in both Fig. 1 and Fig. 5. The bushing has engagement means for cooperation with the engagement means of the pin 5 for positionally fixing the pin in the bushing. In many cases, it may be advantageous to provide such a bushing 15 in the second furniture component 3. Suitably, the bushing 15 is manufactured from a semi-hard, somewhat deformable material which permits the forming of threads when the pin 5 is rotated.

In order to increase the stability of the fitting 1, it may advantageously be provided with an additional pin 16 which is disposed to be accommodated in an aperture in the first furniture component 2. Since the fitting 1 is located so close to the outer edge of the first furniture component 2 that a portion of the housing 4 is visible at this edge, the pin 16 will absorb a considerable proportion of the tractive force when the connecting fitting 1 interconnects the furniture components 2 and 3 to one another. Without the pin 16, the risk that the edge of the first furniture component 2 will break is considerably greater.

A plate-shaped connecting member 21 is disposed between the housing 4 and the pin 16 and, at the same time, constitutes a portion of the upper side of the fitting 1.

### DESCRIPTION OF ALTERNATIVE EMBODIMENTS

The connecting fitting 1 which was described in the foregoing may be modified in a plurality of respects. For example, the aperture 17 in the inner part of the wall 13 in the housing 4 may be dispensed with if the journal member 11 is shortened sufficiently for the lever 8 still to be able to be passed to its end position 9.

The slope of the threads 14 on the pin 5 determines how hard the two furniture components 2 and 3 will be drawn towards one another. In order to realise a harder drawing, the connecting fitting 1 may be designed such that the pin 5 is drawn somewhat inwards when the lever 8 is moved closer to the end position 10. One method of realising this inward drawing of the pin 5 is to design the corridor 7 such that the lever 8, when moved towards the end position 10, moves away from the outer edge 18 of the fitting 1. Preferably, the corridor 7 is designed so that the forward corridor section 19 which lies most proximal to and is approximately parallel with the forward edge 18 is curved so that its end, which corresponds to the end position 10, is located at a greater distance from the forward end 18 than the remainder of the forward corridor section 19.

Other engagement means than the threads 14 on the pin 5 may also be conceivable. One possible solution is that the pin 5 is arranged for a bayonet catch and the bushing 15 or the second furniture component 3 is given a corresponding design.

The engagement means may also be given different types of asymmetric form. One alternative is to cause the pin 5 to be an eccentric screw with an approximately circular cross-sectional area.

It is also possible to dispose the threads 14 so that they engage direct with the material in the second furniture component 3 and the bushing 15 will thus be superfluous.

The present invention may be modified further without departing from the scope of the appended Claims.

## Claims

1. A connecting fitting (1) for interconnecting a first (2) and a second (3) furniture component, and comprising a housing (4>) which may be accommodated in a hole of corresponding configuration in the first furniture component (2), a pin (5) projecting from the housing (4) and which is insertable in an aperture in a second furniture component (3), and an operating device (6) which is disposed to rotate the pin (5) about its longitudinal axis, the pin (5) being provided with engagement means for engagement with the second furniture component (3) on rotation of the pin (5), **characterized in that** the pin (5) is disposed to be retractable in its entirety from its projecting position into the housing (4).

2. The connecting fitting (1) as claimed in Claim 1, **characterized in that** the operating device (6) includes a lever (8) movable in a corridor (7) and having two end positions (9,10) corresponding to the wholly projecting and wholly retracted positions of the pin (5), respectively.

3. The connecting fitting (1) as claimed in Claim 1 or 2, **characterized in that** the operating device (6) is disposed both to rotate the pin (5) and to displace it in its longitudinal direction.

4. The connecting fitting (1) as claimed in Claim 2 0r 3, **characterized in that** the operating device (6) includes a snap coupling at one of the end positions (9, 10).

5. The connecting fitting (1) as claimed in any of Claims 1 to 4, **characterized in that** the operating device (6) includes means for a minor retraction of the pin (5) when this approaches its wholly projecting position.

6. The connecting fitting (1) as claimed in any of Claims 1 to 5, **characterized in that** the pin (5) is disposed on a journal member (11) which may be accommodated in an aperture (12) in that part of the wall (13) of the housing (4) which is most proximal the second furniture component (3).

7. The connecting fitting (1) as claimed in Claim 6, **characterized in that** the cross-sectional area of the pin (5) is less than the cross-sectional area of the journal member (11).

8. The connecting fitting (1) as claimed in any of Claims 1 to 7, **characterized in that** said engagement means consist of threads (14).

9. The connecting fitting (1) as claimed in any of Claims 1 to 7, **characterized in that** said engagement means include a bayonet catch.

10. The connecting fitting (1) as claimed in any of Claims 1 to 9, **characterized in that** a bushing (15) is disposed in the second furniture component (3) for cooperation with said engagement means.

11. The connecting fitting (1) as claimed in Claims 8 and 10, **characterized in that** said bushing (15) is manufactured from a semi-hard, somewhat deformable material which permits forming of threads on rotation of the pin (5).

12. The connecting fitting (1) as claimed in any of Claims 1 to 11, **characterized in that** the housing (4) is connected to a pin (16) which is insertable in a corresponding aperture in the first furniture component (2).
